# FASCICULE DE BREVET EUROPEEN

(11) **EP 3 643 766 B1**
(45) Date de publication et mention de la délivrance du brevet: **28.04.2021**
(21) Numéro de dépôt: 19204384.2
(22) Date de dépôt: 21.10.2019
(51) Int. Cl.: C10B 53/02, C10G 3/00, C10G 21/16, C10J 3/00, C10L 5/44

(54) **PROCÉDÉ DE RAFFINAGE D'UNE BIO-HUILE DE PYROLYSE**
RAFFINIERVERFAHREN EINES PYROLYSE-BIOÖLS
METHOD FOR REFINING BIO-OIL FROM PYROLYSIS

(30) Priorité: 23.10.2018 FR 1859803
(43) Date de publication de la demande: 29.04.2020
(73) Titulaire: Commissariat à l'énergie atomique et aux énergies alternatives, 75015 Paris (FR)
(72) Inventeur: GOUGET, Valentin, 39380 Monts sour Vaudrey (FR); ROUBAUD, Anne, 38054 Grenoble Cedex 09 (FR); ROUSSELY, Julien, 38054 Grenoble Cedex 09 (FR)
(74) Mandataire: Brevalex

(56) Documents cités:
- US-A1- 2011 232 163
- US-A1- 2016 348 009
- DE MIGUEL MERCADER F ET AL: "Pyrolysis oil upgrading by high pressure thermal treatment", BIOCHEMISTRY, AMERICAN CHEMICAL SOCIETY, vol. 89, no. 10, 1 octobre 2010 (2010-10-01), pages 2829-2837, XP002669462, ISSN: 0006-2960, DOI: 10.1016/J.FUEL.2010.01.026 [extrait le 2010-02-04]
- Oasmaa: "Physico-chemical properties of FPBO", , 29 March 2018 (2018-03-29), XP055749747, Retrieved from the Internet: URL:https://www.residue2heat.eu/wp-content /uploads/2018/03/D3_3_Physico_chemical_pro perties_of_FPBO_1.0_VTT_20171219.pdf [retrieved on 2020-11-12]

## Description

### DOMAINE TECHNIQUE

La présente invention se rapporte au domaine de la valorisation des bio-huiles de pyrolyse.

Plus spécifiquement, elle se rapporte à un procédé de raffinage d'une bio-huile de pyrolyse en vue de sa valorisation, notamment en tant que substitut du fioul.

### ÉTAT DE LA TECHNIQUE ANTÉRIEURE

La biomasse lignocellulosique représente l'une des ressources renouvelables les plus abondantes sur terre et, certainement, l'une des moins coûteuses.

Cette biomasse est constituée par des déchets agricoles (tels que la paille et les enveloppes de grains de céréales), des déchets provenant d'exploitations forestières et d'industries de transformation du bois (telles que les scieries, entreprises de déroulage, menuiseries, panneautiers, etc) et auxquels on donne aussi le nom de « produits connexes » de la filière bois, ainsi que par des cultures dédiées à la production de biomasse lignocellulosique.

La valorisation de la biomasse lignocellulosique en biocombustibles aptes à remplacer les combustibles d'origine fossile est devenue un enjeu majeur.

A été développé ces dernières années un certain nombre de procédés de pyrolyse et, notamment de pyrolyse dite « rapide » ou « flash », permettant de transformer cette biomasse en matières valorisables, à savoir :
- des gaz incondensables (CO, H₂, CO₂, CH₄, etc),
- des résidus solides carbonés que l'on regroupe sous les noms de « char » ou de « charbon végétal », et
- des liquides, typiquement de couleur brun foncé, auxquels on donne le nom de « bio-huiles de pyrolyse » ou de « bio-huiles pyrolytiques » et qui seront appelées plus simplement « bio-huiles » dans ce qui suit.

Les bio-huiles ont une composition qualitative et quantitative qui varie en fonction de la biomasse à partir de laquelle elles sont produites ainsi que des conditions de pyrolyse et de condensation des vapeurs de pyrolyse dont elles sont issues.

Toutefois, elles ont en commun de comprendre une teneur en eau non négligeable, typiquement de l'ordre de 20 % à 30 % massiques, de nombreux composés organiques oxygénés (acides carboxyliques, cétones, aldéhydes, phénols et dérivés phénoliques, etc), et de présenter un pH acide, typiquement de l'ordre de 2,5 à 3.

Il a été proposé d'utiliser les bio-huiles comme biocombustibles et, notamment, comme substituts du fioul.

Toutefois, il s'avère que les bio-huiles ont des propriétés physico-chimiques totalement différentes de celles des combustibles d'origine fossile et qu'en particulier leur teneur en eau, leur teneur en élément oxygène (entre 30 % et 60 % massiques sur base sèche, selon le type de bio-huile) et leur pH acide sont des freins à leur utilisation en tant que biocombustibles.

En effet, les teneurs en eau et en élément oxygène des bio-huiles leur confèrent un faible pouvoir calorifique supérieur (ou PCS), tandis que leur pH pose des problèmes de corrosion des installations métalliques destinées à être en contact avec ces bio-huiles comme les chaudières.

De plus, la combinaison de leur teneur en eau et de leur pH peut générer des problèmes d'instabilité dans le temps.

Il est donc nécessaire, pour tirer au mieux profit de l'utilisation d'une bio-huile comme biocombustible, de soumettre préalablement cette bio-huile à un post-traitement qui permette d'en abaisser drastiquement les teneurs en eau et en élément oxygène et d'en diminuer l'acidité.

Les post-traitements proposés à ce jour sont principalement des traitements qui visent à désoxygéner les bio-huiles, notamment par des procédés d'hydrodésoxygénation (ou HDO) dont le principe est similaire à celui de l'hydrodésulfuration (ou HDS) qui est pratiquée dans les raffineries pour réduire la teneur en soufre du pétrole.

L'hydrodésoxygénation consiste à traiter thermiquement, généralement à une température allant de 250°C à 450°C, une bio-huile sous une forte pression de dihydrogène et en présence d'un catalyseur. Au cours de ce traitement, les composés organiques oxygénés présents dans la bio-huile sont dégradés et forment de l'eau et des hydrocarbures.

L'hydrodésoxygénation apparaît être une voie efficace de désoxygénation des bio-huiles puisqu'il a été rapporté dans la littérature qu'elle permet d'obtenir une fraction organique liquide présentant une teneur en élément oxygène inférieure à 5 % massiques (cf. Mortensen et al., Applied Catalysis A : General 2011, 407, 1-19, ci-après référence **[1]**). Toutefois, elle requière des quantités élevées et de dihydrogène (25 moles de H₂ par kg de bio-huile pour une désoxygénation quasi complète - cf. référence **[1]**) et de catalyseur, ce qui la rend trop coûteuse pour une exploitation à une échelle industrielle (les catalyseurs étant souvent des métaux nobles).

Il a, par ailleurs, été proposé par une équipe de chercheurs de BTG-Biomass Technology Group BV et de l'université de Twente (Pays-Bas) de désoxygéner une bio-huile par un traitement dénommé « HPTT » pour « High Pressure Thermal Treatment ». Ce traitement consiste à soumettre dans un réacteur la bio-huile à une température de 300°C à 340°C avec un temps de séjour de quelques minutes à 14 MPa. Il conduit à la conversion de la bio-huile en trois phases : une phase gazeuse essentiellement constituée de CO₂, une phase aqueuse ayant entraîné quelques composés organiques et une phase organique dont la teneur en élément oxygène est de 23 % massiques sur base sèche (cf. Mercader et al., Fuel 2010, 89, 2829-2837, ci-après référence **[2]**).

Dans la référence **[2],** cette même équipe de chercheurs s'est intéressée à l'influence dans le procédé HPTT de trois paramètres opératoires, à savoir la température, le temps de séjour en réacteur et l'addition d'eau à la bio-huile dans un rapport volumique bio-huile/eau de 1:1. Autant ils mettent en évidence qu'une augmentation de la température et du temps de séjour se traduit par une augmentation de la production d'eau et de CO₂ et, partant, une diminution de la teneur en élément oxygène de la phase organique, autant rien n'est dit dans cette référence sur l'impact que peut présenter la dilution de la bio-huile par de l'eau sur la désoxygénation de cette bio-huile. Il est seulement indiqué que cette dilution entraîne, d'une part, une diminution des poids moléculaires des composés présents dans la phase organique et, d'autre part, une diminution de la production de CO₂ US 2016/0348009 et US 2011/0232163 divulguent un procédé de raffinage d'une bio-huile de pyrolyse.

Compte-tenu de ce qui précède, un enjeu est donc de fournir un procédé qui permette de convertir très efficacement des bio-huiles de pyrolyse en biocombustibles ayant un PCS plus élevé et une acidité plus faible que ceux que présentent ces bio-huiles, et ce, de façon simple, rapide, peu coûteuse et avec un impact faible, voire nul, sur l'environnement, y compris dans le cadre d'une mise en œuvre à une échelle industrielle.

### EXPOSÉ DE L'INVENTION

L'invention a justement pour objet de fournir un procédé de raffinage d'une bio-huile de pyrolyse qui répond à toutes ces exigences.

Ce procédé de raffinage est défini dans les revendications.

Ainsi, selon l'invention, on soumet une phase visqueuse préalablement obtenue par démixtion de la bio-huile, à un traitement hydrothermal (si le solvant est de l'eau), solvothermal (si le solvant est organique) ou hydro/solvothermal (si le solvant est composé partiellement d'eau et partiellement d'un solvant organique), et ce, en utilisant une température allant de 250°C à 350°C et une pression allant de 10 MPa à 20 MPa. Ce traitement conduit à la formation de trois phases, à savoir :
- une phase gazeuse qui est majoritairement composée de monoxyde et de dioxyde de carbone ;
- une phase aqueuse - dite phase aqueuse A2 - qui est majoritairement composée d'eau et de composés organiques hydrosolubles (acides carboxyliques, cétones, aldéhydes, sucres, etc) ; et
- une phase « slurry », ou suspension, qui est un mélange de particules solides et d'un liquide riche en composés organiques non hydrosolubles, qui présente un PCS plus élevé et une acidité plus faible que ceux de la bio-huile de départ, et qui peut donc avantageusement être utilisée comme substitut du fioul soit après une mise en forme permettant de la transformer en un biocombustible solide soit après une séparation solide/liquide permettant de la transformer en un biocombustible solide et en un biocombustible liquide.

Ainsi, par exemple, une suspension ayant un PCS de 29 MJ/kg et 75 % massiques d'élément carbone a été obtenue par le procédé de l'invention à partir d'une bio-huile ayant un PCS de 17 MJ/Kg et 47 % massiques d'élément oxygène.

Conformément à l'invention, la température utilisée à l'étape b) est, de préférence, de 300°C à 350°C.

Comme précédemment indiqué, le solvant utilisé à l'étape b) représente au moins 30 % en masse et, de préférence, au moins 50 % en masse de la masse totale solvant+phase visqueuse.

Ce solvant peut être de l'eau, un solvant organique ou un mélange de ceux-ci.

Lorsque le solvant est de l'eau, cette eau peut être :
- de l'eau sans aucun additif;
- de l'eau à laquelle ont été ajoutés un ou plusieurs additifs, par exemple choisis parmi les sels et, notamment, les carbonates et les chlorures de métaux alcalins ou alcalino-terreux (par exemple, Na₂CO₃, K₂CO₃, CaCO₃, NaCl, KCl, CaCl₂, etc), les oxydes de métaux alcalins ou alcalino-terreux (par exemple, NaO, CaO, MgO, etc) et les hydroxydes de métaux alcalins ou alcalino-terreux (par exemple, NaOH, KOH, Ca(OH)₂) ;
- l'eau de l'une des phases aqueuses A1 et A2 produites lors d'un précédent raffinage d'une bio-huile par le procédé de de l'invention ; ou encore
- une eau obtenue par un post-traitement de l'une des phases aqueuses A1 et A2 produites lors d'un précédent raffinage d'une bio-huile par le procédé de l'invention.

Lorsque le solvant est organique, alors il peut notamment s'agir d'éthanol, de propanol ou d'isopropanol.

De préférence, le solvant est de l'eau.

Conformément à l'invention, le traitement de l'étape b) est, de préférence, réalisé pendant une durée allant de quelques secondes (c'est-à-dire au moins 2 secondes) à 2 heures, de préférence de quelques secondes à 30 minutes et, mieux encore, de quelques secondes à 5 minutes.

Par ailleurs, le traitement de l'étape b) peut être réalisé en mode discontinu (c'est-à-dire par lots), auquel cas il est typiquement réalisé sous une atmosphère inerte, par exemple sous azote ou sous argon, ou bien en mode continu, auquel cas le recours à une atmosphère inerte n'est pas nécessaire.

Ce traitement peut être réalisé dans tout réacteur conçu pour supporter des températures allant au moins jusqu'à 350°C et des pressions allant au moins jusqu'à 20 MPa. Ce réacteur comprend, par exemple, un autoclave muni d'un agitateur mécanique, un four électrique dans lequel est placé l'autoclave, et des lignes d'alimentation/prélèvement liquide et gazeux.

Conformément à l'invention, le traitement de l'étape b) est appliqué à la phase visqueuse issue de la démixtion de la bio-huile en une phase aqueuse A1 et une phase visqueuse, les Inventeurs ayant, en effet, constaté que la réduction de la teneur en élément oxygène de la bio-huile est plus élevée lorsque le traitement de l'étape b) est appliqué à la phase visqueuse issue de la démixtion de cette bio-huile plutôt qu'à la bio-huile elle-même. Ainsi, par exemple, l'application d'un traitement hydrothermal à une bio-huile comprenant 47 % massiques d'élément oxygène a permis d'obtenir une suspension comprenant 21,3 % massiques d'élément oxygène alors que l'application du même traitement hydrothermal à la phase visqueuse issue de la démixtion de cette bio-huile a permis d'obtenir une suspension comprenant 17,9 % massiques d'élément oxygène.

Aussi, l'étape a) comprend-elle, de préférence, une démixtion de la bio-huile.

Comme connu en soi, cette démixtion est réalisée :
- en mélangeant la bio-huile (qui contient déjà de l'eau), par exemple pendant 1 minute, avec de l'eau pour obtenir un mélange comprenant une teneur en eau supérieure à 30 % massiques et, de préférence, supérieure à 50 % massiques afin que la démixtion se produise ; puis
- en laissant décanter le mélange.

La phase visqueuse est ensuite séparée de la phase aqueuse, par exemple par filtration, centrifugation ou décantation.

Comme précédemment, l'eau utilisée pour la démixtion de la bio-huile peut être de l'eau sans aucun additif, de l'eau à laquelle ont été ajoutés un ou plusieurs additifs, notamment du même type que ceux précités (carbonates, chlorures, oxydes, hydroxydes, etc, de métaux alcalins ou alcalino-terreux), l'eau de l'une des phases aqueuses A1 et A2 produites lors d'un précédent raffinage d'une bio-huile par le procédé de l'invention ou encore de l'eau obtenue par un post-traitement de l'une de ces phases aqueuses A1 et A2.

Comme précédemment indiqué, la suspension obtenue à l'étape b) peut être transformée en un combustible solide, auquel cas le procédé comprend de plus les étapes suivantes :
- séparation de la suspension de la phase aqueuse A2, par exemple par filtration, centrifugation ou décantation ;
- ajout éventuel d'additifs à la suspension ; et
- mise en forme mécanique de la suspension, par exemple par pressage ou par extrusion (après mélange, par exemple, avec de la poudre de bois) pour obtenir des granulés, moyennant quoi on obtient un biocombustible solide.

En variante, la suspension obtenue à l'étape b) peut être transformée en un combustible solide et un combustible liquide, auquel cas le procédé comprend de plus les étapes suivantes :
- séparation de la suspension de la phase aqueuse A2, par exemple par filtration, centrifugation ou décantation ; et
- séparation de la suspension en une phase solide et une phase liquide, par exemple par filtration à chaud ou au moyen d'un solvant organique tel que l'acétate d'éthyle, moyennant quoi on obtient un biocombustible solide et un biocombustible liquide.

De préférence, les phases aqueuses A1 et A2 produites par le procédé sont valorisées.

En premier lieu, elles peuvent être valorisées en étant utilisées dans le raffinage ultérieur d'une bio-huile, qui peut être du même type ou différente de celle venant d'être raffinée, et ce, à l'étape a) si cette étape comprend une démixtion de la bio-huile et/ou à l'étape b) si le traitement qui est appliqué à la bio-huile ou à la phase visqueuse issue de sa démixtion est un traitement hydrothermal ou hydro/solvothermal.

En variante, elles peuvent également être soumises à des post-traitements permettant de les valoriser sous la forme de chaleur, d'eau, de gaz valorisables (H₂, CH₄, etc) et/ou de composés chimiques (alcanes, esters, etc) propres à être ajoutés au(x) biocombustible(s) produit(s) par le procédé de l'invention en vue d'augmenter encore son (leur) PCS.

Ainsi, par exemple, chacune des phases aqueuses A1 et A2 peut être soumise à l'un quelconque des traitements suivants :
- une gazéification en eau supercritique, c'est-à-dire à une température supérieure à 374°C et sous une pression supérieure à 22,1 MPa, auquel cette gazéification s'effectue selon la réaction suivante :
   Phase aqueuse A1/A2 → CH₄ + H₂ + H₂O+ sel dissous ;
- une oxydation en eau supercritique, auquel cas l'oxydation s'effectue selon la réaction suivante :
   Phase aqueuse A1/A2 + oxydant → CO₂ + H₂O + chaleur + sel dissous ;
- une oxydation en eau sous-critique, c'est-à-dire à une température inférieure à 374°C et sous une pression inférieure à 22,1 MPa), auquel cas l'oxydation s'effectue selon la réaction suivante :
   Phase aqueuse A1/A2 + oxydant → acides carboxyliques + H₂O + chaleur + sel dissous.

L'eau produite par ces trois traitements peut être éliminée du procédé en tant qu'effluent industriel mais elle peut aussi être utilisée dans le raffinage ultérieur d'une bio-huile, et ce, à l'étape a) si cette étape comprend une démixtion de la bio-huile et/ou à l'étape b) si le traitement qui est appliqué à la bio-huile ou à la phase visqueuse issue de sa démixtion est un traitement hydrothermal ou hydro/solvothermal.

Les acides carboxyliques produits au cours d'une oxydation en eau sous-critique peuvent servir de composés intermédiaires pour les deux traitements suivants :
- une électrolyse de Kolbe conduisant à la réaction suivante :
   Acides carboxyliques + H₂O + sel dissous → alcanes + H₂ + CO₂ + saumure ;
- une estérification de Fischer selon la réaction suivante :
   Acides carboxyliques + alcools → esters + H₂O.

Le procédé de l'invention est applicable à toute bio-huile issue d'une pyrolyse de biomasse lignocellulosique et, notamment, d'une pyrolyse du bois d'arbres forestiers tel que le bois de pin.

Le procédé de raffinage d'une bio-huile de pyrolyse de l'invention présente de nombreux avantages. En effet, outre de permettre une conversion très efficace de bio-huiles de pyrolyse en biocombustibles ayant un PCS plus élevé et une acidité plus faible que ceux que présentent ces bio-huiles, il présente les avantages :
- d'être simple en œuvre et de ne pas requérir pour sa mise en œuvre à une échelle industrielle des installations complexes et coûteuses ;
- de s'affranchir de toute utilisation de dihydrogène et de catalyseurs contrairement aux procédés d'hydrodésoxygénation, ce qui est très intéressant d'un point de vue économique ;
- de consommer peu de matières premières et de produire très peu de déchets du fait notamment de la possibilité de recycler les phases aqueuses A1 et A2, ce qui est aussi très intéressant, non seulement d'un point de vue économique mais également environnemental ; ainsi, la mise en œuvre du procédé peut s'effectuer en circuit quasi autonome.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES FIGURES

La figure 1 illustre schématiquement les différentes étapes que présente le procédé de raffinage de l'invention dans un mode de mise en œuvre préféré de ce procédé.
La figure 2 illustre schématiquement les différents post-traitements auxquels peuvent être soumises les phases aqueuses A1 et A2 produites par le procédé illustré sur la figure 1.

### EXPOSÉ DÉTAILLÉ DE MODES DE MISE EN ŒUVRE PARTICULIERS

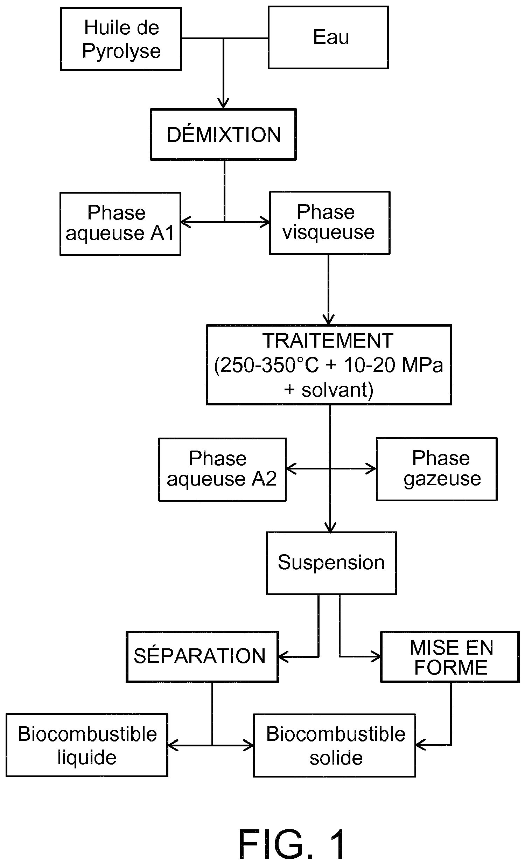

On se réfère tout d'abord à la figure 1 qui illustre schématiquement les différentes étapes du raffinage d'une bio-huile de pyrolyse présentant une teneur en eau au plus égale à 30 % massiques, typiquement de l'ordre de 20 % à 30 % massiques, par un mode de mise en œuvre préféré du procédé de l'invention.

Dans ce mode de mise en œuvre préféré, le procédé de l'invention comprend successivement :
- la démixtion de la bio-huile en mélangeant la bio-huile avec de l'eau pour obtenir un mélange présentant une teneur en eau supérieure à 30 % massiques et, de préférence, supérieure à 50 % massiques puis décantation du mélange, moyennant quoi on obtient la formation de deux phases distinctes et aisément séparables : une phase aqueuse A1 d'une part, et une phase organique d'autre part, dont la viscosité est plus élevée que celle de la phase aqueuse A1, et qui, de ce fait, est dite « phase visqueuse » ;
- la récupération de la phase visqueuse par séparation de la phase aqueuse A1 ;
- le traitement de la phase visqueuse ainsi récupérée à une température de 250°C à 350°C et sous une pression de 10 MPa à 20 MPa, en présence d'un solvant qui représente au moins 30 % en masse et, de préférence, au moins 50 % en masse du milieu formé par le solvant et la phase visqueuse, moyennant quoi on obtient une phase gazeuse composée majoritairement de CO₂ et de CO, une phase aqueuse A2 composée majoritairement d'eau et de composés organiques hydrosolubles, et une suspension (ou « slurry ») qui est un mélange de particules solides et d'un liquide riche en composés organiques non hydrosolubles ;
- la récupération de la suspension par séparation de la phase aqueuse A2 ;
- la transformation de la suspension ainsi récupérée en un biocombustible solide et, éventuellement en un biocombustible liquide, cette transformation pouvant être réalisée en soumettant la suspension à un traitement de mise en forme mécanique soit telle quelle soit après ajout d'un ou plusieurs additifs, auquel cas on obtient un biocombustible solide, soit en séparant la suspension en une phase solide et une phase liquide, moyennant quoi on obtient un biocombustible solide et un biocombustible liquide.

Les modalités de réalisation de ces différentes étapes sont celles précédemment décrites dans l'« Exposé de l'invention ».

Comme précédemment indiqué, les phases aqueuses A1 et A2 produites au cours du procédé tel qu'illustré sur la figure 1 peuvent être utilisées dans le raffinage ultérieur d'une bio-huile, et ce, pour la démixtion de cette bio-huile et/ou pour le traitement de la phase visqueuse issue de cette démixtion si ce traitement est un hydrothermal ou hydro/solvothermal.

Toutefois, elles peuvent aussi être soumises à des post-traitements permettant de les valoriser sous la forme de chaleur, d'eau, de gaz valorisables (H₂, CH₄, etc) et/ou de composés chimiques (alcanes, esters, etc) dont l'addition au(x) biocombustible(s) produit(s) par le procédé de l'invention permettra d'augmenter encore le PCS de ce(s) biocombustible(s).

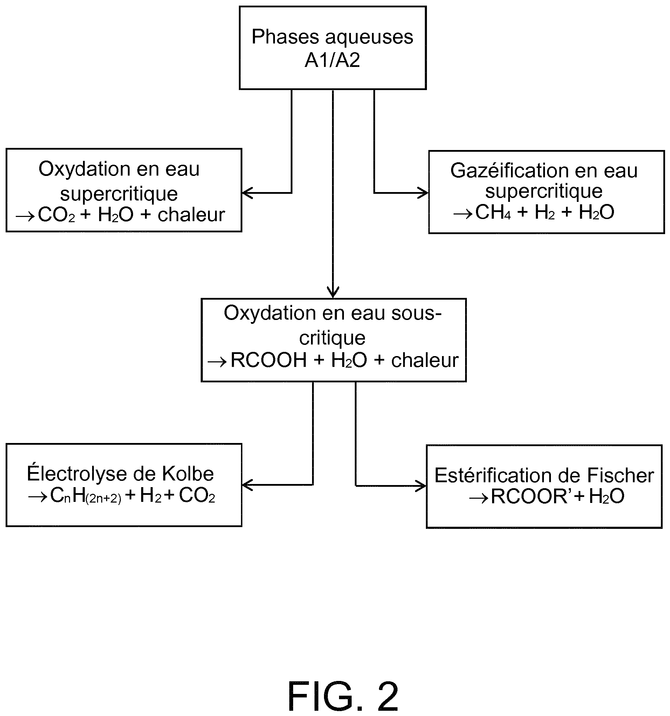

Ces post-traitements sont illustrés schématiquement sur la figure 2.

### Validation expérimentale du procédé de l'invention :

### Démixtion d'une bio-huile :

Un volume de 10 mL d'une bio-huile de pyrolyse présentant une teneur en eau de 25 % massiques (BTG BioLiquids) est mélangé pendant quelques secondes avec 10 mL d'une solution aqueuse comprenant 6 g/L de Na₂CO₃ et 6 g/L de NaCl, puis le mélange est laissé au repos pour décantation.

On obtient ainsi 5 g d'une phase visqueuse et 13 mL d'une phase aqueuse A1.

### Traitement hydrothermal d'une bio-huile :

Une bio-huile de pyrolyse présentant une teneur en eau de 25 % massiques (BTG BioLiquids) est soumise à un traitement hydrothermal.

Pour ce faire, un réacteur est rempli de 78 g d'eau puis inerté sous azote. La pression initiale à température ambiante dans le réacteur est de 0,57 MPa. Le réacteur est ensuite chauffé à 300°C. À cette température, la pression dans le réacteur monte jusqu'à atteindre 10,9 MPa. Lorsque la température de 300°C est atteinte, on injecte 51,3 g de l'huile de pyrolyse et on laisse la réaction opérer pendant 15 minutes. Puis, le réacteur est refroidi par un système à l'air.

On obtient ainsi 3 phases : une phase gazeuse, une phase aqueuse A2 et une suspension, représentant respectivement 2,70 g, 97,8 g et 25,1 g.

La suspension est soumise à une étape de séparation solide/liquide, moyennant quoi on obtient 19,95 g de biocombustible liquide et 2,30 g de biocombustible solide.

Les bilans carbone et énergétique (balance + COT-mètre Shimadzu TOC-L CSH) sont présentés dans le tableau I ci-dessous. Les pourcentages exprimés correspondent à des pourcentages par rapport à la valeur initiale.

**Tableau I**

| | **Bilan Carbone** | | **Bilan énergétique** | |
|---|---|---|---|---|
| | g | % | kJ | % |
| **Huile de pyrolyse** | 24,06 | ---- | 868,35 | ----- |
| **Phase gazeuse** | 0,80 | 3,33 | 1,89 | 0,22 |
| **Phase aqueuse A2** | 4,67 | 19,41 | 141,22 | 16,26 |
| **Suspension** | 18,21 | 75,69 | 737,70 | 84,95 |
| **Biocombustible solide** | 1,73 | 7,20 | 55,19 | 6,36 |
| **Biocombustible liquide** | 14,51 | 60,31 | 564,33 | 64,99 |

Comme le montre ce tableau, 75 % du carbone initial et 85 % de l'énergie initiale de la bio-huile se retrouvent dans la suspension issue du traitement hydrothermal de cette bio-huile.

### RÉFÉRENCES CITÉES

**[1]** Mortensen et al., Applied Catalysis A : General 2011, 407, 1-19
**[2]** Mercader et al., Fuel 2010, 89, 2829-2837

## Revendications

1. Procédé de raffinage d'une bio-huile de pyrolyse, comprenant au moins les étapes suivantes :
a) démixtion de la bio-huile en une phase aqueuse A1 et une phase visqueuse, la phase visqueuse comprenant une teneur en eau au plus égale à 30 % massiques ; et
b) traitement de la phase visqueuse à une température de 250°C à 350°C et sous une pression de 10 MPa à 20 MPa, en présence d'un solvant, le solvant représentant au moins 30 % en masse de la masse du milieu formé par le solvant et la phase visqueuse, moyennant quoi on obtient une phase gazeuse, une phase aqueuse A2 et une suspension.

2. Procédé selon la revendication 1, dans lequel la température de l'étape b) est de 300°C à 350°C.

3. Procédé selon la revendication 1 ou la revendication 2, dans lequel le solvant de l'étape b) représente au moins 50 % en masse de la masse du milieu formé par le solvant et la phase visqueuse.

4. Procédé selon l'une quelconque des revendications 1 à 3, dans lequel le solvant de l'étape b) est de l'eau, un solvant organique ou un mélange de ceux-ci.

5. Procédé selon l'une quelconque des revendications 1 à 4, dans lequel le traitement de l'étape b) dure de quelques secondes à 2 heures, de préférence de quelques secondes à 30 minutes.

6. Procédé selon l'une quelconque des revendications 1 à 5, dans lequel le traitement de l'étape b) est réalisé sous une atmosphère inerte.

7. Procédé selon l'une quelconque des revendications 1 à 6, dans lequel l'étape a) comprend les étapes suivantes :
- mélange de la bio-huile avec de l'eau pour obtenir un mélange ayant une teneur en eau supérieure à 30 % massiques ;
- décantation du mélange, moyennant quoi on obtient la démixtion de la bio-huile en la phase aqueuse A1 et la phase visqueuse ; et
- séparation de la phase visqueuse de la phase aqueuse A1.

8. Procédé selon l'une quelconque des revendications 1 à 7, qui comprend de plus les étapes suivantes :
- séparation de la suspension de la phase aqueuse A2 ;
- ajout éventuel d'additifs à la suspension ; et
- mise en forme mécanique de la suspension.

9. Procédé selon l'une quelconque des revendications 1 à 7, qui comprend de plus les étapes suivantes :
- séparation de la suspension de la phase aqueuse A2 ; et
- séparation de la suspension en une phase liquide et une phase solide.

10. Procédé selon des revendications 1 à 9, dans lequel l'une au moins des phases aqueuses A1 et A2 est soumise à un post-traitement de gazéification en eau supercritique et/ou d'oxydation en eau supercritique ou en eau sous-critique.

11. Procédé selon les revendications 1 à 10, dans lequel la bio-huile est une bio-huile obtenue par pyrolyse du bois d'arbres forestiers, de préférence du bois de pin.

## Patentansprüche

1. Verfahren zum Raffinieren eines Pyrolyse-Bioöls, umfassend wenigstens die folgenden Schritte:
a) Entmischen des Bioöls in eine wässrige Phase A1 und eine viskose Phase, wobei die viskose Phase einen Wassergehalt von höchstens gleich 30 Massen-% umfasst; und
b) Behandeln der viskosen Phase bei einer Temperatur von 250°C bis 350°C und unter einem Druck von 10 MPa bis 20 MPa in Anwesenheit eines Lösungsmittels, wobei das Lösungsmittel wenigstens 30 Massen-% der Masse der Umgebung repräsentiert, die durch das Lösungsmittel und die viskose Phase gebildet ist, wodurch man eine gasförmige Phase, eine wässrige Phase A2 und eine Suspension erhält.

2. Verfahren nach Anspruch 1, bei dem die Temperatur des Schritts b) von 300°C bis 350°C ist.

3. Verfahren nach Anspruch 1 oder Anspruch 2, bei dem das Lösungsmittel des Schritts b) wenigstens 50 Massen-% der Masse der Umgebung repräsentiert, die durch das Lösungsmittel und die viskose Phase gebildet ist.

4. Verfahren nach einem der Ansprüche 1 bis 3, bei dem das Lösungsmittel des Schritts b) Wasser, ein organisches Lösungsmittel oder eine Mischung derselben ist.

5. Verfahren nach einem der Ansprüche 1 bis 4, bei dem die Behandlung des Schritts b) von einigen Sekunden bis zu 2 Stunden dauert, vorzugsweise von einigen Sekunden bis zu 30 Minuten.

6. Verfahren nach einem der Ansprüche 1 bis 5, bei dem die Behandlung des Schritts b) unter einer Inertatmosphäre durchgeführt wird.

7. Verfahren nach einem der Ansprüche 1 bis 6, bei dem der Schritt a) die folgenden Schritte umfasst:
- Mischen des Bioöls mit Wasser, um eine Mischung zu erhalten, die einen Wassergehalt von mehr als 30 Massen-% hat;
- Absetzen der Mischung, wodurch man die Entmischung des Bioöls in die wässrige Phase A1 und die viskose Phase erhält; und
- Separieren der viskosen Phase von der wässrigen Phase A1.

8. Verfahren nach einem der Ansprüche 1 bis 7, das ferner die folgenden Schritte umfasst:
- Separieren der Suspension von der wässrigen Phase A2;
- eventuell Hinzufügen von Additiven zu der Suspension; und
- mechanisches Formen der Suspension.

9. Verfahren nach einem der Ansprüche 1 bis 7, das ferner die folgenden Schritte umfasst:
- Separieren der Suspension von der wässrigen Phase A2; und
- Separieren der Suspension in eine flüssige Phase und eine feste Phase.

10. Verfahren nach den Ansprüchen 1 bis 9, bei dem wenigstens eine der wässrigen Phasen A1 und A2 einer Nachbehandlung zur Vergasung in superkritischem Wasser und/oder zur Oxidierung in superkritischem Wasser oder in unterkritischem Wasser unterzogen wird.

11. Verfahren nach den Ansprüchen 1 bis 10, bei dem das Bioöl ein Bioöl ist, das durch Pyrolyse von Holz von Waldbäumen erhalten wird, vorzugsweise von Kiefernholz.

## Claims

1. Process for refining a pyrolysis bio-oil, comprising at least the following steps:
a) demixing the bio-oil into an aqueous phase A1 and a viscous phase, the viscous phase comprising a water content at most equal to 30% by mass; and
b) treating the viscous phase at a temperature of 250°C to 350°C and at a pressure of 10 MPa to 20 MPa, in the presence of a solvent, the solvent representing at least 30% by mass of the mass of the medium formed by the solvent and the viscous phase, whereby a gaseous phase, an aqueous phase A2 and a slurry are obtained.

2. Process according to claim 1, wherein the temperature of step b) is from 300°C to 350°C.

3. Process according to claim 1 or claim 2, wherein the solvent in step b) represents at least at least 50% by mass of the mass of the medium formed by the solvent and the viscous phase.

4. Process according to any one of claims 1 to 3, wherein the solvent in step b) is water, an organic solvent or a mixture thereof.

5. Process according to any one of claims 1 to 4, wherein the treatment in step b) lasts from a few seconds to 2 hours, preferably from a few seconds to 30 minutes.

6. Process according to any one of claims 1 to 5, wherein the treatment in step b) is carried out in an inert atmosphere.

7. Process according to any one of claims 1 to 6, wherein step a) comprises the following steps:
- mixing the bio-oil with water to obtain a mixture having a water content greater than 30% by mass;
- settling the mixture, whereby the demixing of the bio-oil into the aqueous phase A1 and the viscous phase is obtained; and
- separating the viscous phase from the aqueous phase A1.

8. Process according to any one of claims 1 to 7, which further comprises the following steps:
- separating the slurry from the aqueous phase A2;
- optionally adding additives to the slurry; and
- mechanical conditioning the slurry.

9. Process according to any one of claims 1 to 7, which further comprises the following steps:
- separating the slurry from the aqueous phase A2; and
- separating the slurry into a liquid phase and a solid phase.

10. Process according to claims 1 to 9, wherein at least one of the aqueous phases A1 and A2 is subjected to a post-treatment of gasification in supercritical water and/or oxidation in supercritical water or subcritical water.

11. Process according to claims 1 to 10, wherein the bio-oil is a bio-oil obtained by pyrolysis of wood from forest trees, preferably pinewood.
